# EUROPEAN PATENT SPECIFICATION

(11) **EP 2 203 306 B1**
(45) Date of publication and mention of the grant of the patent: **27.04.2011**
(21) Application number: 08837459.0
(22) Date of filing: 09.10.2008
(51) Int. Cl.: B32B 5/02, B32B 37/00, D21H 27/22

(54) **LAMINATE HAVING IMPROVED WEATHERABILITY**
LAMINAT MIT VERBESSERTER WITTERUNGSBESTÄNDIGKEIT
STRATIFIÉ PRÉSENTANT UNE RÉSISTANCE AUX INTEMPÉRIES AMÉLIORÉE

(30) Priority: 09.10.2007 GB 0719702
(43) Date of publication of application: 07.07.2010
(73) Proprietor: Dynea OY, 00530 Helsinki (FI)
(72) Inventor: STEINDL, Harald Karl, A-3506 Hollenburg (AT); WAGNER, Robert Alexander, A-1150 Vienna (AT); GANNON, Fergus Michael, 1180 Wien (AT); STEFKE, Barbara Sylvia, A-3100 St. Pölten (AT)
(74) Representative: Derks, Wilbert
(86) International application number: PCT/EP2008/063554
(87) International publication number: WO 2009/047304

(56) References cited:
- WO-A1-00/41883
- WO-A1-88/01575
- BE-A- 625 907
- BE-A- 698 711
- GB-A- 1 505 679
- US-A- 3 666 593
- US-A- 5 116 446
- DATABASE WPI Week 199402, Derwent Publications Ltd., London, GB; AN 1994-012438, XP002541386 & JP 05 320382 A (TOSHIBA CHEM CORP) 03 December 1993

## Description

The invention relates to a process for the manufacture of a weather resistant laminate comprising a resin impregnated fibrous layer, preferably a resin impregnated decorative paper layer on a carrier layer. The invention further relates to laminates obtainable with the process according to the invention, to an intermediate deco laminate for use in the manufacture of the weather resistant laminate and to the use of said laminates.

WO 2006/119950 A1 describes a multilayered board comprising a material board whose visible surface is coated with at least one resin impregnated paper layer. The multilayered board is prepared by laminating a material board with a resin impregnated paper layer having an at least 5 micrometer thick resin layer at the outer surface.

The problem of the prior art laminates is that the optical attractiveness of the surface deteriorates too rapidly, in particular when exposed to exterior conditions that give high levels and more frequent variations of thermal stress, humidity and (UV)-irradiation. Such conditions lead to a rapidly loss of the gloss, loss of the original colour, greying of the surface, followed by roughening of the surface. Eventually, not only the optical attractiveness is lost, but also the protection of the carrier layer is lost leading to exposure of the carrier layer to exterior conditions resulting in deterioration of the integrity and mechanical properties of the carrier layer itself. Because of these problems, the application of laminates decorated with resin impregnated paper layer in exterior applications is limited.

WO2004/103700 relates to decorative panels consisting of a carrier layer and decorative layer for outdoor use that have an improved weather resistance. The laminate is produced by applying on a carrier layer an adhesion layer and applying thereon a decorative printed paper layer obtained by applying on a paper layer a surface layer of a synthetic resin comprising one or more radiation curable components and radiation cure the obtained assembly. This prior art process is complex because it requires more layers, relies on more expensive radiation curable coating resins, and involves more difficult radiation curing technology.

US5116446 describes a process for the manufacture of a laminate wherein a resin impregnated paper overlay is first partially cured and then coated with a resin coating layer, and fully cured at high temperature and pressure (separate from the substrate). The resin content in the paper layer is low to create porosity for improving the bonding with the coating layer. The fully cured overlay is laminated to the substrate at low temperature and pressure using an adhesive. The process aims to avoid telegraphing; i.e. substrate irregularities showing up in the cured overlay. Apart from the fact that this process is complex in principle, the obtained laminate also does not have sufficiently good weatherability.

The object of the invention therefore is to provide a weather resistant laminate and an economic process for the manufacture thereof.

This object is according to the invention achieved by a process for the manufacture of a weather resistant laminate comprising the steps of providing a resin impregnated fibrous layer; curing the resin of the resin impregnated fibrous layer in a first curing step wherein in said first curing step a contact pressure is applied to the resin impregnated fibrous layer; applying a resin coating layer on the at least partially cured resin impregnated fibrous layer; curing the resin of the resin coating layer in a separate second curing step and laminating the resin impregnated fibrous layer on at least one surface of a carrier layer before, during or after the first curing step, or laminating the cured and coated resin impregnated fibrous layer on at least one surface of a carrier layer before, during or after the second curing step.

It was found that the laminate obtainable by the process has a very high gloss and a significantly improved weather resistance as will be exemplified by the examples described herein. Without wishing to be bound by theory the inventors believe that the problem of the poor weather resistance of the prior art laminates is caused by the fact that fibres of the fibrous layer, in particular the hygroscopic cellulose fibres in a paper layer, extend through the resin layer creating a channel for moisture to diffuse into the laminate, causing it to swell and deteriorate mechanical and optical properties of the surface. The process of the invention ensure that the fibres cannot extend to the surface providing, as confirmed by experiments described below, an improved weatherability.

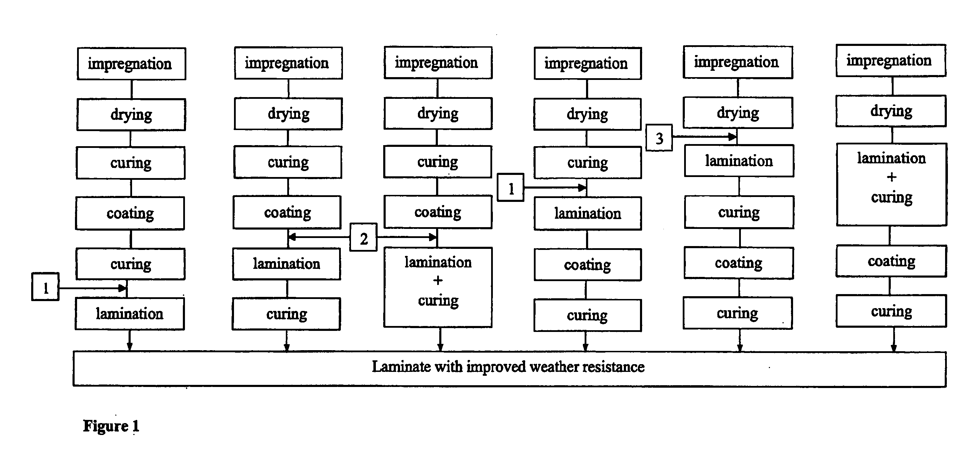

Figure 1 provides an illustration of different possible embodiments of the process according to the invention, wherein each box presents a separate unit operation performing the operation or function indicated in the box. As described below in more detail, in a preferred embodiment, the carrier layer is a stack of uncured resin impregnated layers which is simultaneously cured in the first or second curing step. Preferably a stack of phenol formaldehyde (PF) papers is used. The advantage is that an additional adhesive layer is not needed to adhere the carrier layer. The reference numbers 1, 2 and 3 refer to an optional additional process step for adding an additional adhesive layer. Reference number 1 indicates that, in case the carrier layer is not formed of a stack of uncured resin impregnated layers itself, an optional additional adhesive layer can be provided or alternatively in case 2 a coating resin layer can be provided on both sides of the cured resin impregnated fibrous layer, wherein one coating resin layer acts as the adhesive layer. Reference number 3 indicates that optionally an additional adhesive layer can be provided for any type of carrier layer to adhere the dried but yet uncured resin impregnated layer. The various embodiments are described in more detail below.

The resin coating layer is the outer layer of the laminate. "Outer layer" means the layer directly exposed to the ambient conditions, implying that the laminate does not comprise layers on top of the coating layer. The laminate may comprise additional layers between the carrier layer and the resin impregnated fibrous layer, but preferably does not comprise additional layers between the resin impregnated fibrous layer and the coating layer. The terms "layer on", "layer on top or or "overlay layer" here and hereafter mean the layer at a surface facing away from the carrier layer.

A laminate is defined to be a structure comprising a consolidated stack of at least 2 distinguishable layers, wherein a layer is a shape having one dimension small compared to the other two dimensions, a stack is at least 2 layers superimposed along the small dimension of the layers wherein consolidated means bonded, preferably by adhesive force, to form a mechanically coherent structure. Laminating is the process of forming a laminate, comprising combining two or more layers and consolidating the layers together. In a laminate layers can be distinguishable for example by differences in composition, orientation, position, dimensions, properties and/or in that they have been consolidated as separate layers in separate steps, for example in separate curing steps.

A layer may be of a pre-formed material, for example a web, film or sheet material or may be formed at least in part "in-situ", for example by applying a layer of a precursor material and then converting the precursor material in its definitive state, optionally in the same step as the laminate consolidation step. A layer may also be combinations of a pre-formed material with a precursor material, for example a composite layers comprising a solid material and a liquid precursor (for example a resin impregnated paper layer, a fiber reinforced layer, etc), a solution of a material in a solvent (for example a coating resin solution) or a dispersion of material in a dispersant (for example a water dispersed coating resin). The precursor material may be a solid layer, a liquid layer a particle layer or combinations thereof, but preferably is a liquid layer. The converting of the precursor material can be done chemically by initiating reaction by releasing a chemical initiator for example by raising temperature, by radiation or by separate addition of a chemical initiator or can be done physically, for example by drying, heating or melting or by combinations of chemical and physical conversion.

Layers in a laminate may have different compositions chosen in view of different functions of said layer in the laminate, for example for providing mechanical properties (strength, stiffness, impact resistance etc), adhesion between layers, barrier properties to prevent migration of gasses, moisture and solutes in, out or through the laminate, colour, decoration, gloss, scratch resistance, etc.

Impregnation is contacting a porous solid material layer with a liquid material which fills (at least partially) the pores of the solid material layer optionally forming also a layer of precursor material on top of at least one main surface of the resin impregnated fibrous layer.

The fibrous layer in the resin impregnated fibrous layer typically has an irregular surface on a micrometer scale and typically is compressible. Therefore, in the first curing step a contact pressure is applied to the resin impregnated fibrous layer. The contact pressure is preferably at least 1.5MPa, or, in case of calendering, a line pressure of at least 15 N/mm. In this way the surface irregularities are reduced by compression and irreversibly fixated by curing said resin in a first curing step before applying a coating layer on top of said cured resin impregnated fibrous layer. In this process it is assured that, even at a relatively low resin amount, the surface irregularities do not extend through the cured resin layer to the surface of the laminate and it is assured that the laminate has excellent weatherability and suitability for outdoor applications. The contact pressure can be applied by calendering, rolling or pressing, for example by band pressing during at least a part of the curing time, preferably simultaneous with lamination another layer, for example the carrier layer and preferably in a continuous way. This results in a more uniform even surface and a smaller amount of coating, i.e. a thinner coating layer is needed to achieve a good weather resistance.

Before curing, the resin impregnated fibrous layer and/or the resin coating layer are typically dried. Preferably, the humidity of the resin impregnated fibrous layer ranges from 4.0 - 7.5 wt%. The drying is preferably done in an air flow at elevated temperatures, but temperature and time should be sufficiently low to prevent that significant curing occurs. In this context curing refers to the cross-linking of polymer chains, brought about by chemical additives (hardener) and heat. The resin impregnated fibrous layer and carrier layer are preferably combined in a continuous process using calendering or lamination as described above. The resin impregnated fibrous layer can be fully cured or partially cured before the resin coating layer is added on top of the resin impregnated fibrous layer. Partial curing can have the advantage of providing a good compatibility and adhesion between the at least partially cured resin impregnated fibrous layer and the resin coating layer, in particular in case the resin in both layers is both amino-formaldehyde resin, resulting in a lower probability of delamination.

In one embodiment, in the first curing step a contact pressure is applied to the resin impregnated fibrous layer by calendering, preferably in a one-nip calendering procedure, whereby the top and the bottom roll are heated. The calendering is preferably done at an elevated temperature, preferably between 110 and 300°C, more preferably between 110 and 240 °C, at a line pressure preferably between 15 and 280 N/mm and at a calendering speed preferably between 0.3 and 100 m/min, more preferably between 0.3 and 35 m/min.

The contact pressure during curing can also be applied simultaneous with lamination. The lamination is preferably done by continuous press lamination (CPL), short cycle conditions or high pressure lamination (HPL). In HPL, the pressure preferably ranges between 3 and 10 MPa, preferably between 5.4 and 8.8 MPa, the curing temperature preferably is between 100 and 180°C, preferably between 120 and 140°C and the pressing time preferably is between 0.3 minutes and 30 minutes. In case the carrier layer is a stack of PF impregnated paper, HPL is preferred because the long pressing times and relatively low temperatures are needed to ensure a homogeneous and fully cured laminate, in particular a good flow of the resin, diffusion of water released by the curing reaction.

Short cycle conditions are typically using lamination pressure ranging between 1.5 and 4.5, more preferably between 2 and 4 MPa, at a temperature of 160 °C to 240 °C, more preferably between 160 and 220 and most preferably between 160 and 180°C and at a pressing time between 5 and 30, more preferably between 8 and 20 and most preferably between 10 and 20 sec. Short cycle conditions can be advantageously used in highly reactive resin systems, for example MF, UF resins or blends thereof.

The process in principle comprises two different main embodiments. In a first embodiment, the process comprises the steps of laminating a resin impregnated fibrous layer on at least one surface of a carrier layer whilst applying a contact pressure; curing the resin of the resin impregnated fibrous layer in a first curing step before, during or after the laminating; applying a resin coating layer on the at least partially cured resin impregnated fibrous layer and curing the resin of the resin coating layer in a separate second curing step.

In a second embodiment the process comprises the steps of curing the resin of the resin impregnated fibrous layer in a first curing step whilst applying a contact pressure, applying a resin coating layer on the at least partially cured resin impregnated fibrous layer and curing the resin of the resin coating layer in a separate second curing step before, during or after laminating the coated and cured resin impregnated fibrous layer on at least one surface of a carrier layer. If the second curing is done before the lamination, an intermediate weather resistant laminate is formed which can be adhered to a carrier layer for example by an adhesive layer. This is not necessary if the carrier layer is a stack of curable resin impregnated paper layers, preferably phenolic papers, because this type of carrier layer has sufficient resin to bind the cured resin impregnated fibrous layer on its surface.

In the above described first embodiment it is preferred that the first curing step is simultaneous with the lamination step and a pressure is applied by lamination of the resin impregnated fibrous layer with the carrier layer. Similarly, in the second embodiment it is preferred that the resin of the coating layer in the second curing step is cured during the laminating step. This is most advantageous for process economic reasons. The curing and lamination step can be separate when using an intermediate adhesive layer or when the curing is done under different conditions, for example by radiation curing. Radiation curing is possible but less preferred because of the complexity of the process. Because a contact pressure is applied in the first curing step, the first curing step can best be done during lamination. Further, this has the optional advantage that the resin of the resin impregnated fibrous layer can act as adhesive to bond the resin impregnated fibrous layer to the carrier layer, thus preventing necessity of an additional adhesive layer between carrier layer and resin impregnated fibrous layer.

In particular, the invention relates to such weather resistant laminate which is obtainable by a process comprising the steps of; providing a resin impregnated deco paper layer wherein the amount of resin is between 70 and 190 dry wt.% relative to the weight of the paper, curing the resin of the resin impregnated fibrous layer in a first curing step wherein in said first curing step a contact pressure is applied to the resin impregnated fibrous layer, applying a resin coating layer on the at least partially cured resin impregnated fibrous layer and curing the resin of the resin coating layer in a separate second curing step. This simple 2-layer laminate, optionally provided with an adhesive layer at the surface opposite to the resin coating layer, can be separately sold for laminating onto carrier layers or other substrates. The invention therefore also relates to the use of such intermediate laminate product, consisting of a resin impregnated fibrous layer and a resin coating layer and optionally an adhesive layer, for separate lamination of substrates, for example in household applications like staircases, shelves, etc.

The carrier layer preferably is a wood based panel, preferably medium density fibreboard (MDF), high-density fibreboard (HDF), plywood, oriented strand board (OSB) or particle board. Most preferably the carrier layer is a panel made of a stack of resin impregnated paper layers, preferably Kraft paper, preferably impregnated with a phenolic resin. The resin in the carrier layer is cured separately or simultaneous with the resin in the resin impregnated fibrous layer and/or resin coating layer in the first or second curing step described above. The phenolic resin impregnated Kraft paper carrier layer provides the most water resistant core of all cores mentioned.

The fibrous layer in the resin impregnated fibrous layer can be a paper layer, a wood layer, a woven or non-woven fabric, a web or a felt In case of a wood layer, it is preferred that the layer is thin enough to be deformable under a pressure applied during the first curing step. The skilled man is able to establish without undue burden the choice of the nature of the wood in combination with the thickness of the layer to arrive at a deformable layer that can suitably be used in the invention. A soft wood can be used in relatively high thickness, whereas harder wood is preferably used in thinner layers, preferably 0.2 - 1 mm. Soft wood layers include layers of wood that is naturally soft but also wood that inherits the property of being soft for example by post-treatment. Types of naturally soft and deformable woods are for example birch, poplar, linden, alder as well as all types of coniferous wood. The fibers can be organic fibers, preferably cellulosic fibers, but can also be inorganic fibers, such as glass fibers, rock-, glass or slack wool. Preferably the fibrous layer is a paper layer, preferably decorated paper layer having a density between 60 and 150 g per square meter.

The resins of the resin impregnated fibrous layer or the coating layer and most preferably of both the fibrous layer and the coating layer are preferably selected from the group of amino-formaldehyde resins; preferably urea-formaldehyde (UF), melamine-formaldehyde (MF), melamine urea formaldehyde (MUF), etherified urea-formaldehyde or etherified melamine-formaldehyde, hydroxyl-aromatic, preferably phenolic,-formaldehyde resins (PF), acrylic-, epoxy-, polyester-, or polyurethane resins or combinations thereof. Suitable and preferred combinations are for example: a blend of MF + PF, a blend of MF + etherified MF, a blend of etherified MF + PF or a blend of etherified MF + MF + PF. These preferred combinations are meaningful because they show good water resistance, in particular compared to UF-resin. UF resins are preferably used only admixed with acrylates to provide water resistance. Isocyanate resins are not preferred in the laminate according to the invention because of the safety and health risks which require special equipment to process and to protect against inhalation of toxic compounds.

UF resin can be a very good resin for the fibrous layer, but is less preferred for the coating layer because the water resistance is relatively poor. It is preferably only used as resin for the resin impregnated fibrous layer. The advantage there is that UF resin is very inexpensive. PF resin has the disadvantage of a relatively poor light stability and therefore it is usually not preferred for use in a clear decorative surface. The coating layer preferably is of a transparent and hard and scratch resistant resin and must have a good water resistance. In view of that, it was found that resin for the resin coating layer preferably is chosen from the group MF, etherified MF, a blend of MF + PF, a blend of MF + etherified MF, a blend of etherified MF + PF or a blend of etherified MF + MF + PF.

More preferably, the resins in both the fibrous layer and the coating layer are both amino-formaldehyde resins. These resins have very good mechanical and optical properties. Most preferably the resin of the resin impregnated fibrous layer and the resin of the resin coating layer are substantially the same. With "substantially the same" is meant that the resin itself is of the same type, but other additives may be present An advantage thereof is that the process is less complicated and that the chemical and mechanical properties of the resin impregnated fibrous layer and the resin coating layer resin layer are comparable leading to a better resistance against delamination in mechanical stress.

The resin used to impregnate the fibrous layer typically has a solid content between 50 and 65 wt %. The solid content is determined by weighing an amount (m1) of 1.0g to 1.1 g (accuracy of 4 decimal digits) of liquid resin is put into an aluminium dish according to DIN 12605, then put into a drying oven at a temperature of 120°C for 120 minutes. The weight after drying (m2) is determined after the sample has cooled to room temperature. The solids-content is determined as solids [%] = (m2/ml) x 100%. The resin in the resin impregnated fibrous layer and/or the resin coating layer may comprise one or more additives selected from UV-stabilizers, UV absorbers, UV protective inorganic compounds, plasticizers, gloss improver or other typical impregnation additives. A most preferred resin of the resin impregnated fibrous layer and/or the resin coating layer is a melamine formaldehyde resin preferably with a formaldehyde to melamine molar ratio between 1.4 and 1.8, preferably having reactivity between 0.2 and 45 min. The resin of the impregnated fibrous layer and preferably also the resin of the coating layer is a melamine formaldehyde resin.

The reactivity of the resin is determined by mixing 254.0g resin with 43.5g of distilled water and 0.9mL of the hardener Prefere 70 9160L (to achieve a reactivity of about 300s for benchmarking the resin's quality). From this mixture an amount of 10.0 g ± 0.1 g is transferred into a reaction tube with a glass rod for stirring. The tube + resin-mixture (as described above) + rod is dipped into boiling water (in a 600mL- glass beaker), the mixture is stirred for exactly 30 sec and then left without stirring in the boiling water. The reactivity [s] is the time measured from the point where the tube has been put into the boiling water until the entire content of the tube has turned white. The reactivity of a particular resin sample can be adjusted by the amount of hardener. A higher reactivity can be achieved by adding an amount of hardener higher than 0.9 mL (reactivity < 300s.) The process to reach a desired reactivity is an iterative experimental process. For resin solutions having resin content above 65% the viscosity becomes too high to use the above method and a different method is used as described below. Nevertheless, also in this method the preferred reactivity is between 0.2 and 45 min.

The amount of resin in the resin impregnated fibrous layer depends both on the nature of the resin and on the nature of the fibrous layer. In case of MF and UF type resins, the amount of resin in the resin impregnated fibrous layer preferably is between 70, more preferably 75 and 190 wt% (dry resin weight relative to the total weight of the impregnated fibrous layer). In case of PF type of resins, the amount is preferably between 25, preferably 35 and 50 weight percent. In case the fibrous layer is a veneer wood layer, the amount of resin can be lower than 70 wt%, for example between 25 and 70 wt%.

Before further processing, the resin impregnated resin impregnated fibrous layer and/or the resin coating layer is dried before curing, preferably to a humidity ranging from 3.0 to 10, preferably from 4.0 - 7.5 wt%. The humidity of the impregnated fibrous layer after drying is determined by cutting a circle of 100 mm in diameter having and weighing (ml), then this circle is re-dried for 5 min at 160°C and then re-weighed (m2). The relative humidity is then calculated as percentage of volatiles = (1-m2/m1) x 100 [%].

The amount of coating layer is preferably more than 5 g/m² to achieve good weatherability and is preferably not higher than 200 g/m² or more preferably lower than 150 g/m² even more preferably lower than 125 g/m² and most preferably below 100 g/m² because at such high amount of coating layer the further improvement of weatherability is not significant, because during lamination pressing the resin will squeeze out at the edge of the laminate and because it is difficult to apply such a thick layer with good optical properties. According to the invention good weatherability properties can be achieved at relatively low amount of coating layer. In particular, good result can already be obtained when the resin coating layer is preferably applied in an amount between 5 and 80, more preferably between 5 and 70, even more preferably between 5 and 60 and most preferably between 5 and 50 g/m² (defined as weight of dry resin per square meter). The coating layer thickness preferably ranges between 5 to 50µm, preferably between 10 and 40µm. The resin coating layer can be applied onto the resin impregnated fibrous layer in an impregnation line, for example between a first and the second drying zone, preferably using wire squeegees, or alternatively using spraying or curtain application. Special surface effects can be made on the resin impregnated fibrous layer in calendering equipment.

An amino-formaldehyde resin used for the coating layer typically has a solid content between 50 and 65 wt %. It was found that a laminate with a higher gloss can be obtained in a novel process for coating a substrate with an amino formaldehyde resin (AF resin) solution which comprises;
- producing a highly concentrated AF resin solution, most preferably a melamine or urea formaldehyde solution in water, comprising at least 65, more preferably at least 67, even more preferably at least 70 and most preferably at least 72 wt% of AF resin, by dissolving an amino resin powder in a standard AF resin solution comprising between 40 and 60 wt% AF resin,
- applying a coating layer of the concentrated AF resin solution to the substrate and
- add a hardener or crosslinking compound to the concentrated AF resin solution by mixing into said solution or by contacting to the coating layer before, during or after applying to the substrate, and
- curing the resin, preferably under pressure.

The process further has the advantages that a good weatherability and good surface optical properties can also be achieved when applied to porous substrates, in particular to fibrous layers that are partially impregnated with resin. Another advantage is that the coating layer can be more rapidly cured and that there is less loss of resin material during pressing by squeezing out at the edges of the laminate. Accordingly, also thicker coating layers can be achieved; in particular having a resin amount of between 20 and 200, more preferably between 30 and 150 and even more preferably between 40 and 100 (g of dry resin)/m² and thickness between 30 and 60µm, preferably between 40 and 50µm. Accordingly, improved weatherability is achieved in combination with improved optical properties.

In the above process, the type of AF of the standard AF resin solution may be different from the type of AF of the resin powder, for example urea powder may be added to a standard melamine resin solution. The AF resin powder and the AF resin solution are preferably chosen in combination such that the highly concentrated AF resin solution has formaldehyde to amino ratio between 1.1 to 2.6, preferably between 1.65 and 1.95. The F:M ranges for MF standard impregnation resin solution is preferably between 1.0 and 2.5 and the F:M range for MF powder resins is preferably between 1.4 and 2.6. The concentrated AF resin solution preferably has a viscosity of at least 1200, more preferably at least 1500, even more preferably at least 2000 and most preferably at least 3000mPa. The viscosity ([mPas]) is determined on a cone plate equipped Paar Physica MCR301-device at 20°C and at a shear rate of 200 s-1 (ISO 3219). 1.0g of the resin sample is placed on the plate and the cone (50mm diameter) is lowered to give a gap of 0.5mm between cone and plate. Ten measuring points are taken from one sample in rotating mode (of the cone) whereby the arithmetical average of the last three values taken. In view obtaining improved optical properties, in particular a low loss of gloss on weathering, it is preferred that in the process according to the invention the coating layer is applied using the above described process using a highly concentrated amino formaldehyde resin solution.

The invention further relates to a weather resistant laminate obtainable by the process according to the invention described above, in particular to a weather resistant laminate comprising a cured resin impregnated fibrous layer, preferably a decorated paper layer, and on said paper layer a cured resin coating layer, which are laminated onto a carrier layer on at least one surface thereof, wherein the resin of the resin impregnated fibrous layer and the resin coating layer are preferably both independently chosen from the group of amino-formaldehyde resins, preferably urea-formaldehyde, melamine-formaldehyde, etherified urea-formaldehyde or etherified melamine-formaldehyde or phenolic formaldehyde, acrylic-, epoxy-, polyester-, or polyurethane resins or combinations thereof and wherein the resin of the resin impregnated fibrous layer is cured in a first separate curing step before curing the resin of the resin coating layer in a second curing step. As described above the resins in the fibrous layer and the coating layer are preferably of the same resin type or even substantially the same resin.

The invention further also relates to a weather resistant intermediate laminate for use in the manufacture of a weather resistant laminate according to the invention, which intermediate laminate is obtainable by a process comprising the steps of providing a resin impregnated paper layer, preferably a decorative paper layer, wherein the amount of resin is between 70 and 190 dry wt.% relative to the weight of the paper, curing the resin of the resin impregnated fibrous layer in a first curing step wherein in said first curing step a contact pressure is applied to the resin impregnated fibrous layer, applying a resin coating layer on the at least partially cured resin impregnated fibrous layer and curing the resin of the resin coating layer in a separate second curing step. The preferences for each of the components described above similarly apply for the intermediate laminate. The intermediate laminate preferably only consists of a fully cured resin impregnated fibrous layer and a fully cured resin coating layer and optionally an adhesive layer. The intermediate laminate can be used for separate lamination of substrates and is particularly useful for protecting, decorating or renovating substrates, for example walls, stair cases, table surfaces etc.

The weather resistant laminate and intermediate laminate according to the invention have a low loss of gloss after weathering, preferably having a loss of gloss after weathering of at most 25%, preferably at most 20%, more preferably at most 15%, even more preferably at most 10% and most preferably at most 5%. (expressed as the loss of gloss in % before and after 1300 hours of weathering, wherein loss of gloss is determined in a TMS-723A (Tasco) gloss meter at an angle of 60° (using a light beam having an oval size of 6mm x 3mm) and using standard black glossy glass as standard for 100% gloss and wherein weathering was done for 1300 hours in a UV-2000 Atlas weatherometer following pre EN ISO 4892-3 of Nov 1, 2003). The exposure period of one cycle lasts for 5h dry at an irradiance of 0.55W.m².nm⁻¹ of a UVA lamp of 340nm at a black standard temperature of 50°C±3°C followed by 1h of water spray without light at a temperature of 20°C±5°C. In short term testing, the loss of gloss after weathering for 600 hours preferably is at most 10%, more preferably at most 7% and most preferably at most 5%.

The weather resistant laminate according to the invention is particularly useful for outdoor applications. The invention therefore further relates to the use of the weather resistant laminate or intermediate laminate according to the invention for the manufacture of wall cladding or siding, decking, surfaces of garden furniture (table tops, chairs; in particular chair seats & back rests) treads of stairs, handrails, railing e.g. for balcony).
The invention is illustrated by the following examples.

### Examples 1 to 4:

A resin impregnated paper was prepared by impregnating an 80g/m² decor paper (Technocell Schwarz MPK3222) with a MF resin formulation to achieve a resin pick-up of 120-130 dry resin wt% and a volatile content of 6.5%. The decorative paper was impregnated on a pilot impregnation line by wetting the décor paper by a one- bath impregnation procedure wherein the décor paper is wetted from its back with the resin (by roll) where the resin is allowed to penetrate through the paper to its (future) surface, then runs fully submerged (under the liquid's surface) through the same bath. Subsequently, the "drenched" decor runs through squeezing rolls and then into the drying oven whereby it is transported by an air flow and is dried at elevated temperature to achieve a volatile content of 6.5% at a resin pick-up level of 120 -130%.

The MF resin formulation comprises a melamine formaldehyde solution in water having a solids content of 50 % (hereafter all % are weight percentages unless indicated otherwise), 0.3% of release agent (PAT 523W) and 0.3% wetting agent (PAT 959N). A hardener (Prefere 70 9160L, Dynea) was added to adjust the reactivity of the formulation to 900 s (seconds).

This resin impregnated fibrous layer was used to surface a laminate carrier layer consisting of a stack of a number (as specified in Table 1 for each example) of phenolic film (PF) layers (Trade name: Imprex core stock 155/227F from Stora Enso/ Laminating Papers). The carrier layer was surfaced with said resin impregnated fibrous layer both at the top and the back surface. The carrier layer and resin impregnated fibrous layer were laminated by curing and pressing the mentioned layers to a composite under the conditions parameters given in Table 1 column 3.

The resulting laminate was coated by squeegees (soft roll) with the same type of MF-resin that was used to produce the resin impregnated fibrous layer, whereby the resin formulation contained 60% of solids, 0.3% of release agent, 0.3% of wetting agent and a hardener content that contributed to the desired reactivity (see Table 1, column 4). The amount of coating was varied. The coated laminate was dried in a drying oven with a van for 30 to 60s at 140°C, resulting in various solid contents of resin coating. Table 1, column 5 mentions the resin coating layer dry solid weight in gr/m² after drying and curing. Final curing was performed by pressing in a hydraulically operated single opening press (fabricated by Wickert) having a pressing area of 400 mm x 500 mm under conditions given in Table 1, Column 6.

**Table 1**

| Example | PF-layers | First Curing conditions | Reactivity (s) | Amount of coating (g/m²) | Final curing conditions |
|---|---|---|---|---|---|
| 1 | 3 | 180s/408K | 864 | 12.67 | 1500s/ |
| | | / 9MPa | | | 408K/ |
| | | | | | 9MPa |
| 2 | 3 | 1500s/ | 902 | 10.8 | 1500s/ |
| | | 408K/ | | | 408K/ |
| | | 9MPa | | | 9MPa |
| 3 | 30 | 1500s/ | 908 | 37.2 | 1500s/ |
| | | 408K/ | | | 408K/ |
| | | 9MPa | | | 9MPa |
| 4 | 15 | 1500s/ | 1620 | 32.7 | 1500s/ |
| | | 408K/ | | | 408K/ |
| | | 9MPa | | | 9MPa |

### Examples 5 to 7 and comparative example

The dried resin impregnated paper layer described in Examples 1-4 was cured in a first curing step by calendering in a single nip calender under conditions given in Table 2.

The resulting cured impregnate was, as opposed to Examples 1 to 4, not laminated to a carrier layer, but directly coated in the same way as described in Examples 1-4 applying different amounts of coating resulting in different amount of coating (as indicated in Table 2). The hardener content was chosen to produce the reactivity indicated in Table 2, column 4. The coated impregnate was dried in a drying oven with van for 30 or 60s at 140°C.

The obtained coated resin impregnated fibrous layer was laminated on the back and front surface of a stack of 3 of the PF films in a final curing step performed by pressing in a single opening press under conditions mentioned in Table 2, column 6.

A comparative laminate board (standard) was prepared by laminating and curing the dried resin impregnated fibrous layer described in Example 1-4, to both faces of a carrier layer comprising 3 of the PF-layers at pressing conditions 1500s/ 408K/ 9MPa without a coating layer.

**Table 2:**

| Example | PF-layers | First curing conditions | Reactivity (s) | Amount of coating (g/m²) | Final curing conditions/ PF layers |
|---|---|---|---|---|---|
| 5 | 0 | 383K/282 N/mm | 902 | 9.5 | 1500s/408K/ 9MPa/ 3 |
| 6 | 0 | 423K/ 282 N/mm | 934 | 12.4 | 1500s/ 408K/ 9MPa/ 3 |
| 7 | 0 | 409K/282 N/mm | 902 | 9.8 | 1500s/408K/ 9MPa/ 3 |

Evaluation of all laminate products was performed by artificial weathering in a UV-2000 (Atlas) weatherometer. The weathering cycle was performed according to pre EN ISO 4892-3 "Plastics - Processes of exposure to laboratory light sources", and is characterised by a 1 hour span of spraying at a temperature of 20.0 ± 3°C (water; fresh for each spray), altering with 5 hours of UV-irradiation at a wavelength of 340 nm and 0.55 Wm⁻²nm⁻¹ at a black standard temperature of 50°C.

Changes of the surface due to artificial weathering were displayed as changes in gloss, which was determined along the timeline of artificial weathering. The TMS-723A (Tasco) served to record changes (loss) in gloss according to the impact of weathering measuring the reflection of the sample within an angle of 60° (oval size of 6mm x 3mm) using black coloured glossy glass (included with the equipment) as the standard for 100% gloss.

The weathering resistance of the laminates according to the invention were compared with a prior art laminate board having a similar overall composition, but having only a decorative MF-layer. Table 3, column 4 shows the measured gloss values and the loss of gloss (Δ gloss) after 1300h of artificial weathering.

**Table 3: Gloss of samples and a standard before artificial weathering (0h) compared to gloss after 1300h**

| Example | Gloss (%)0h | Gloss (%)1300h | Δ gloss |
|---|---|---|---|
| standard | 114 | 85 | -29 |
| 1 | 119 | 119 | 0 |
| 2 | 120 | 118 | -2 |
| 3 | 119 | 105 | -14 |
| 4 | 120 | 116 | -4 |
| 5 | 118 | 110 | -8 |
| 6 | 119 | 103 | -16 |
| 7 | 118 | 105 | -13 |

### Example 8.

A decorative paper of 80g/m2 area weight was impregnated with a MF-resin of a molar ratio F:M of 1.6 to give an impregnate with 118.8% resin pick-up and a humidity of 6.5%. The impregnate of 210 mm by 300 mm size was first cured by calendering, applying a roll temperature of 44°C for one of the rolls and 191 °C for the other roll at a set line pressure of 10 N/mm and a speed of 0.5 m/min.

The roll of the lower temperature was shielded with a silicone mat of 80Shore hardness and a temperature of 20°C to create a soft nip. The firstly cured film was coated with a formulation of MF-impregnation resin (molar ratio F:M of 1.6) and MF-powder resin with a molar ratio F:M of 2.6 in a ration 2:1 containing an amount of 0.3% (based on over all formulation weight) of wetting agent and 0.33% (based on over all formulation weight) of hardener Prefere 5002. The solids content of the obtained resin mixture (without additives) was 74.0% referring to a viscosity of 3150 mPas at 20°C. The coating layer was applied manually by a soft coating roll applying no pressure additional to that, which is caused by the weight of the roll itself. The surface was coater-rolled three times whereby the roll was dipped into the coating resin composition after each rolling step. Its reactivity has been adjusted to 260 seconds, whereby the reactivity was determined in a way that 5.0g±0.2g of the resin mixture is put into a test tube of 6mm inner diameter and a length of 160mm, the tube plus sample is placed in boiling water and continuously stirred with a glass rod until the mixture solidifies. The time span taken from the start of heating the mixture to solidification gives the reactivity.

The coating was dried in an oven at 140°C, using a fan speed of 1000rpm for 60 seconds. The obtained deco layer was laminated to a core of six phenol resin impregnated Kraft papers (Stora Enso) and two backers, each impregnates of 80 g/m² décor paper impregnated with MF impregnation resin to give a resin pick up of 118.8%. The core consisting of six PF-impregnates was pre-pressed at 135°C, 90 bar for 420 seconds. The core and the coating layer were simultaneously cured during the second curing and lamination of the coated deco film and was performed in a single opening press at a pressure of 10 bar, a temperature of 120°C for 540 seconds. The final solid amount of the coating material applied was 74.6 g/m².

### Example 9

A decorative paper of 80g/m² area weight was impregnated with a MF-resin of a molar ratio F:M of 1.6 to give an impregnate with 119.4% resin pick-up and a humidity of 6.5%. The impregnate of 210mm by 300mm size was first cured by calendering applying a roll temperature of 183°C for one of the rolls and 192°C for the other roll at a set line pressure of 30N/mm and a speed of 1.0/min. Both rolls were steel rolls.

The firstly cured film was coated with a formulation of MF-impregnation resin (molar ratio F:M of 1.6; solids content of 60%; viscosity of 21-26 mPas) containing an amount of 0.3% (based on over all formulation weight) of wetting agent and 0.33% (based on over all formulation weight) of hardener Prefere 71 9160 (Dynea). The coating layer was applied manually by a soft coating roll applying pressure additional to that, which is caused by the weight of the roll itself. The surface was coater-rolled two times whereby the roll was dipped into the coating resin composition after each rolling step. Its reactivity has been adjusted to 885 seconds. The coating was dried in an oven at 140°C, using a fan speed of 1000rpm for 60 seconds. This film was laminated to a core of three phenol resin impregnated Kraft papers (Stora Enso) and two backers, each impregnates of 80 g/m² décor paper impregnated with MF impregnation resin to give a resin pick up of 119.4%. The second curing was performed in a single opening press at a pressure of 90 bar, a temperature of 135°C for 1500 seconds. The final solid amount of the coating material applied was 19.3 g/m².

The laminate of Example 8 and 9 were cut to a size of 75mm by 150mm and subjected to artificial weathering for 600 hours, following the method described in EN ISO4892-3 (of 2003-11-01) and characterised by loss of gloss measurements as described above. The results are summarised in Table 4.

A comparative laminate board (referred to as "standard" in Table 3 and 4) was prepared by laminating and curing the dried resin impregnated fibrous layer described in Example 1 - 4, to both faces of a carrier layer comprising 3 of the PF-layers at pressing conditions 1500s/ 408K/ 9MPa without a coating layer.

**Table 4.**

| Example | Gloss | Gloss | Δ gloss |
|---|---|---|---|
| | (%) 0h | (%) 600h | |
| Ex. 8 | 118 | 118 | 0 |
| Ex. 9 | 117 | 114 | -3 |
| Standard | 114 | 103 | -11 |

## Claims

1. A process for the manufacture of a weather resistant laminate comprising the steps of
- providing a resin impregnated fibrous layer,
- curing the resin of the resin impregnated fibrous layer in a first curing step, wherein in said first curing step a contact pressure is applied to the resin impregnated fibrous layer,
- applying a resin coating layer on the at least partially cured resin impregnated fibrous layer,
- curing the resin of the resin coating layer in a separate second curing step and
- laminating the resin impregnated fibrous layer on at least one surface of a carrier layer before, during or after the first curing step, or laminating the cured and coated resin impregnated fibrous layer on at least one surface of a carrier layer before, during or after the second curing step.

2. The process according to claim 1, comprising the steps of
- laminating a resin impregnated fibrous layer on at least one surface of a carrier layer wherein a contact pressure is applied to the resin impregnated fibrous layer,
- curing the resin of the resin impregnated fibrous layer in a first curing step before, during or after the laminating,
- applying a resin coating layer on the at least partially cured resin impregnated fibrous layer,
- curing the resin of the resin coating layer in a separate second curing step.

3. The process according to claim 1, comprising the steps of
- curing the resin of the resin impregnated fibrous layer in a first curing step wherein a contact pressure is applied to the resin impregnated fibrous layer,
- applying a resin coating layer on the at least partially cured resin impregnated fibrous layer and
- curing the resin of the resin coating layer in a separate second curing step before, during or after laminating the coated and cured resin impregnated fibrous layer on at least one surface of a carrier layer.

4. The process according to claim 2, wherein the first curing step is simultaneous with the lamination step and the contact pressure is applied by lamination of the resin impregnated fibrous layer with the carrier layer.

5. The process according to claim 3, wherein the second curing step is simultaneous with the lamination to a carrier layer and wherein preferably the carrier layer comprises a curable resin which is simultaneously cured in the second curing step.

6. The process according to anyone of claims 1-5, wherein in the first curing step a contact pressure is applied to the resin impregnated fibrous layer by calendering, and a temperature preferably between 110 and 300°C, at a line pressure preferably between 15 and 280 N/mm and at a calendering speed preferably between 0.3 and 100 m/min.

7. The process according to anyone of claims 1-6, wherein lamination is done by continuous press lamination (CPL), short cycle conditions or by high pressure lamination (HPL) using a pressure ranging between 3 and 10 MPa, a curing temperature preferably between 100 and 180 °C and a pressing time preferably between 0.3 minutes and 30 minutes.

8. The process according to claim 1-7, wherein the resin of the resin impregnated fibrous layer and preferably also of the coating layer is an amino-resin, preferably urea-formaldehyde, melamine-formaldehyde, etherified urea-formaldehyde or etherified melamine-formaldehyde.

9. The process according to anyone of claims 1-8, wherein the resin of the resin impregnated fibrous layer and the resin of the resin coating layer are substantially the same.

10. The process according to anyone of claims 1-9, wherein the resin of the resin impregnated fibrous layer and/or the resin coating layer is dried before curing, preferably to a humidity ranging from 4.0 - 7.5 % (calculated as (1-m2/m1) x 100 %, wherein (m1) and (m2) are the mass of a circle of 100mm diameter sample from the resin impregnated fibrous layer measured before and after drying for 5 min at 160°C).

11. A weather resistant laminate obtainable by the process according to anyone of claims 1 to 10.

12. A weather resistant laminate according to claim 11 comprising a carrier layer and, on at least one surface of said carrier layer (CL), a cured resin impregnated fibrous layer, preferably a décor paper layer, and on the outer surface of said resin impregnated fibrous layer a cured resin coating layer wherein the resin of the resin impregnated fibrous layer and the resin coating layer are preferably both chosen from the group of amino-formaldehyde resin, urea-formaldehyde, melamine-formaldehyde, etherified urea-formaldehyde, etherified melamine-formaldehyde, phenolformaldehyde-, acrylic-, epoxy-, polyester-, or polyurethane resins or combinations thereof and wherein the resin of the resin impregnated fibrous layer has been cured in a first separate curing step, preferably under contact pressure, before applying the resin, and curing the resin of the resin coating layer in a second curing step.

13. A weather resistant intermediate laminate for use in the manufacture of a weather resistant laminate according to claims 11 or 12, which intermediate deco laminate is obtainable by a process comprising the steps of
- providing a resin impregnated paper layer wherein the amount of resin is between 70 and 190 dry wt.% relative to the weight of the paper,
- curing the resin of the resin impregnated fibrous layer in a first curing step wherein in said first curing step a contact pressure is applied to the resin impregnated fibrous layer,
- applying a resin coating layer on the at least partially cured resin impregnated fibrous layer and
- curing the resin of the resin coating layer in a separate second curing step.

14. A weather resistant laminate according to claims 11 or 12 or the intermediate laminate of claim 13, having a loss of gloss after weathering of at most 25% (expressed as the loss of gloss in % before and after 1300 hours of weathering, wherein loss of gloss is determined in a TMS-723A (Tasco) gloss meter at an angle of 60° using an oval shaped light spot of 6mm x 3mm and using standard black glossy glass as standard for 100% gloss and wherein weathering was done for 1300 hours in a UV-2000 Atlas weatherometer according to pre EN ISO 4892-3).

15. Use of the weather resistant laminate according to anyone of claims 11 to 14 for the manufacture of wall cladding/ siding, decking, surfaces of garden furniture, table tops, chair seats & back rests treads of stairs, handrails, railing (e.g. for balcony).

## Patentansprüche

1. Verfahren zur Herstellung eines wetterbeständigen Laminats mit den folgenden Schritten:
- Vorsehen einer harzimprägnierten Faserschicht,
- Härten des Harzes der harzimprägnierten Faserschicht in einem ersten Härtungsschritt, wobei in dem ersten Härtungsschritt ein Anpressdruck auf die harzimprägnierte Faserschicht aufgebracht wird,
- Aufbringen einer Harz-Beschichtungsschicht auf die zumindest teilweise gehärtete harzimprägnierte Faserschicht,
- Härten des Harzes der Harz-Beschichtungsschicht in einem separaten zweiten Härtungsschritt, und
- Laminieren der harzimprägnierten Faserschicht auf mindestens eine Fläche einer Trägerschicht vor, während oder nach dem ersten Härtungsschritt, oder Laminieren der gehärteten und beschichteten harzimprägnierten Faserschicht auf zumindest eine Fläche einer Trägerschicht vor, während oder nach dem zweiten Härtungsschritt.

2. Verfahren nach Anspruch 1, mit den folgenden Schritten:
- Laminieren einer harzimprägnierten Faserschicht auf zumindest eine Fläche einer Trägerschicht, wobei ein Anpressdruck auf die harzimprägnierte Faserschicht aufgebracht wird,
- Härten der harzimprägnierten Faserschicht in einem ersten Härtungsschritt vor, während oder nach dem Laminieren,
- Aufbringen einer Harz-Beschichtungsschicht auf die zumindest teilweise gehärtete harzimprägnierte Faserschicht,
- Härten des Harzes der Harz-Beschichtungsschicht in einem separaten zweiten Härtungsschritt.

3. Verfahren nach Anspruch 1, mit den folgenden Schritten:
- Härten des Harzes der harzimprägnierten Faserschicht in einem ersten Härtungsschritt, wobei ein Anpressdruck auf die harzimprägnierte Faserschicht aufgebracht wird,
- Aufbringen einer Harz-Beschichtungsschicht auf die zumindest teilweise gehärtete harzimprägnierte Faserschicht, und
- Härten des Harzes der Harz-Beschichtungsschicht in einem separaten Härtungsschritt vor, während oder nach dem Laminieren der beschichteten und gehärteten harzimprägnierten Faserschicht auf zumindest eine Fläche einer Trägerschicht.

4. Verfahren nach Anspruch 2, bei welchem der erste Härtungsschritt gleichzeitig mit dem Laminierschritt erfolgt, und der Anpressdruck durch Laminieren der harzimprägnierten Faserschicht mit der Trägerschicht aufgebracht wird.

5. Verfahren nach Anspruch 3, bei welchem der zweite Härtungsschritt gleichzeitig mit dem Laminieren auf eine Trägerschicht erfolgt, und wobei die Trägerschicht vorzugsweise ein härtbares Harz aufweist, das in dem zweiten Härtungsschritt gleichzeitig gehärtet wird.

6. Verfahren nach einem der Ansprüche 1-5, bei welchem im ersten Härtungsschritt durch Kalandrieren ein Anpressdruck auf die harzimprägnierte Faserschicht aufgebracht wird, und eine Temperatur vorzugsweise zwischen 110 und 300°C, ein Leitungsdruck vorzugsweise zwischen 15 und 280 N/mm und eine Kalandriergeschwindigkeit vorzugsweise zwischen 0,3 und 100 m/Min. verwendet wird.

7. Verfahren nach einem der Ansprüche 1-6, bei welchem das Laminieren durch Endlosdrucklaminieren (CPL), Kurzzyklusbedingungen oder durch Hochdrucklaminierung (HPL) unter Verwendung eines Drucks zwischen 3 und 10 MPa, einer Härtungstemperatur vorzugsweise zwischen 100 und 180°C und einer Druckdauer vorzugsweise zwischen 0,3 Minuten und 30 Minuten.

8. Verfahren nach den Ansprüchen 1-7, bei welchem das Harz der harzimprägnierten Faserschicht und vorzugsweise auch der Beschichtungsschicht ein Aminoharz, vorzugsweise Harnstoff-Formaldehyd, Melamin-Formaldehyd, verethertes Harnstoff-Formaldehyd oder verethertes Melamin-Formaldehyd, ist.

9. Verfahren nach einem der Ansprüche 1-8, bei welchem das Harz der harzimprägnierten Faserschicht und das Harz der Harz-Beschichtungsschicht im Wesentlichen gleich sind.

10. Verfahren nach einem der Ansprüche 1-9, bei welchem das Harz der harzimprägnierten Faserschicht und/oder der Harz-Beschichtungsschicht vor dem Härten getrocknet wird, vorzugsweise auf eine Feuchtigkeit von 4,0 - 7,5 % (berechnet aus (1-m2/m1) x 100 %, wobei (m1) und (m2) die Masse eines einen Durchmesser von 100 mm aufweisenden Kreises einer Probe der harzimprägnierten Faserschicht, gemessen vor und nach einer Trocknungszeit von 5 Minuten bei 160 °C, angeben).

11. Wetterbeständiges Laminat, herstellbar durch ein Verfahren nach einem der Ansprüche 1 bis 10.

12. Wetterbeständiges Laminat nach Anspruch 11, mit einer Trägerschicht und, auf zumindest einer Fläche der Trägerschicht (CL), einer gehärteten harzimprägnierten Faserschicht, vorzugsweise einer Dekorpapierschicht, und einer gehärteten Harz-Beschichtungsschicht auf der Außenfläche der harzimprägnierten Faserschicht, wobei das Harz der harzimprägnierten Faserschicht und der Harz-Beschichtungsschicht vorzugsweise beide aus der Gruppe gewählt ist, welche gebildet ist aus: Amino-Formaldehydharzen, Harnstoff-Formaldehyd, Melamin-Formaldehyd, verethertem Harnstoff-Formaldehyd, verethertem Melamin-Formaldehyd, Phenol-Formaldehyd-, Acryl-, Epoxid-, Polyester- oder Polyurethanharz oder Kombinationen derselben, und wobei das Harz der harzimprägnierten Faserschicht in einem ersten separaten Härtungsschritt, vorzugsweise unter Anpressdruck, vor dem Aufbringen des Harzes gehärtet wird, und das Harz der Harz-Beschichtungsschicht in einem zweiten Härtungsschritt gehärtet wird.

13. Wetterbeständiges Zwischenlaminat zur Verwendung in der Herstellung eines wetterbeständigen Laminats nach Anspruch 11 oder 12, wobei das Zwischen-Dekorlaminat durch ein Verfahren herstellbar ist, welches die folgenden Schritte aufweist:
- Vorsehen einer harzimprägnierten Papierschicht, wobei der Harzanteil zwischen 70 und 190 Trockengewichtsprozent bezogen auf das Gewicht des Papiers beträgt,
- Härten des Harzes der harzimprägnierten Faserschicht in einem ersten Härtungsschritt, wobei in dem ersten Härtungsschritt ein Anpressdruck auf die harzimprägnierte Faserschicht aufgebracht wird,
- Aufbringen einer Harz-Beschichtungsschicht auf die zumindest teilweise gehärtete harzimprägnierte Faserschicht, und
- Härten des Harzes der Harz-Beschichtungsschicht in einem separaten zweiten Härtungsschritt.

14. Wetterbeständiges Laminat nach den Ansprüchen 11 oder 12 oder das Zwischenlaminat nach Anspruch 13, mit einem Glanzverlust nach Bewitterung von höchstens 25% (ausgedrückt als Glanzverlust in % vor und nach 1300 Stunden Bewitterung, wobei der Glanzverlust in einer TMS-723A (Tasco) Glanzmessvorrichtung unter einem Winkel von 60° unter Verwendung eines ovalen Lichtflecks von 6 mm x 3 mm und unter Verwendung von standardmäßigem schwarzem glänzendem Glas als Standard für 100% Glanz gemessen wurde, und wobei die Bewitterung für 1300 Stunden in einem UV-2000 Atlas Bewitterungsmesser gemäß der Vornorm EN ISO 4892-3 erfolgte).

15. Verwendung des wetterbeständigen Laminats nach einem der Ansprüche 11 bis 14 zur Herstellung von Wandvertäfelungen/-verkleidungen, Bodenbelägen, Oberflächen von Gartenmöbeln, Tischplatten, Stuhlsitzen und - rückendlehnen, Treppenstufen, Handläufen, Geländern (z. B. für Balkone).

## Revendications

1. Procédé de fabrication d'un stratifié résistant aux intempéries comprenant les étapes consistant à :
- fournir une couche de fibres imprégnées de résine,
- durcir la résine de la couche de fibres imprégnées de résine lors d'une première étape de durcissement, une pression de contact étant appliquée lors de ladite première étape de durcissement sur la couche de fibres imprégnées de résine,
- appliquer une couche de revêtement de résine sur la couche de fibres imprégnées de résine au moins partiellement durcie,
- durcir la résine de la couche de revêtement de résine lors d'une seconde étape séparée de durcissement et
- stratifier la couche de fibres imprégnées de résine sur au moins une surface d'une couche de support avant, pendant ou après la première étape de durcissement, ou stratifier la couche de fibres imprégnées de résine durcie et enduite sur au moins une surface d'une couche de support avant, pendant ou après la seconde étape de durcissement.

2. Procédé selon la revendication 1, comprenant les étapes consistant à :
- stratifier une couche de fibres imprégnées de résine sur au moins une surface d'une couche de support, une pression de contact étant appliquée sur la couche de fibres imprégnées de résine,
- durcir la résine de la couche de fibres imprégnées de résine lors d'une première étape de durcissement avant, pendant ou après la stratification,
- appliquer une couche de revêtement de résine sur la couche de fibres imprégnées de résine au moins partiellement durcie,
- durcir la résine de la couche de revêtement de résine lors d'une seconde étape séparée de durcissement.

3. Procédé selon la revendication 1, comprenant les étapes consistant à :
- durcir la résine de la couche de fibres imprégnées de résine dans une première étape de durcissement, une pression de contact étant appliquée sur la couche de fibres imprégnées de résine,
- appliquer une couche de revêtement de résine sur la couche de fibres imprégnées de résine au moins partiellement durcie et
- durcir la résine de la couche de revêtement de résine lors d'une seconde étape séparée de durcissement avant, pendant ou après la stratification de la couche de fibres imprégnées de résine durcie et enduite sur au moins une surface d'une couche de support.

4. Procédé selon la revendication 2, dans lequel la première étape de durcissement est réalisée simultanément à l'étape de stratification et la pression de contact est appliquée par stratification de la couche de fibres imprégnées de résine sur la couche support.

5. Procédé selon la revendication 3, dans lequel la seconde étape de durcissement est réalisée simultanément à la stratification sur une couche support et dans lequel la couche support comprend de préférence une résine durcissable qui est durcie simultanément lors de la seconde étape de durcissement.

6. Procédé selon l'une quelconque des revendications 1 à 5, dans lequel une pression de contact est appliquée lors de la première étape de durcissement sur la couche de fibres imprégnées de résine par calandrage, et à une température de préférence entre 110 et 300 °C, sous une pression de fluide de préférence entre 15 et 280 N/mm et avec une vitesse de calandrage de préférence entre 0,3 et 100 m/min.

7. Procédé selon l'une quelconque des revendications 1 à 6, dans lequel la stratification est réalisée par une stratification à l'aide d'une presse en continu (CPL), une stratification dans des conditions de cycle court ou sous pression élevée (HPL) en utilisant une pression dans la plage entre 3 et 10 MPa, une température de durcissement de préférence entre 100 et 180 °C et un temps de presse de préférence entre 0,3 minute et 30 minutes.

8. Procédé selon l'une quelconque des revendications 1 à 7, dans lequel la résine de la couche de fibres imprégnées de résine et de préférence également celle de la couche de revêtement est une résine aminique, de préférence urée-formaldéhyde, mélamine-formaldéhyde, urée-formaldéhyde éthérifiée ou mélamine-formaldéhyde éthérifiée.

9. Procédé selon l'une quelconque des revendications 1 à 8, dans lequel la résine de la couche de fibres imprégnées de résine et la résine de la couche de revêtement de résine sont pratiquement les mêmes.

10. Procédé selon l'une quelconque des revendications 1 à 9, dans lequel la résine de la couche de fibres imprégnées de résine et/ou de la couche de revêtement de résine est séchée avant le durcissement, de préférence jusqu'à une humidité dans la plage allant de 4,0 à 7,5 % (calculée par (1 - m2/m1) x 100 %, dans laquelle (m1) et (m2) représentent la masse d'un échantillon sous forme de cercle de 100 mm de diamètre provenant de la couche de fibres imprégnées de résine mesurée avant ou après séchage pendant 5 min à 160 °C).

11. Stratifié résistant aux intempéries pouvant être obtenu par le procédé selon l'une quelconque des revendications 1 à 10.

12. Stratifié résistant aux intempéries selon la revendication 11, comprenant une couche support et, sur au moins une surface de ladite couche support (CL), une couche de fibres imprégnées de résine durcie, de préférence une couche de papier décor, et sur la surface externe de ladite couche de fibres imprégnées de résine une couche de revêtement de résine durcie, la résine de la couche de fibres imprégnées de résine et de la couche de revêtement de résine étant de préférence toutes deux choisies dans le groupe comprenant une résine amino-formaldéhyde, urée-formaldéhyde, mélamine-formaldéhyde, urée-formaldéhyde éthérifiée, mélamine-formaldéhyde éthérifiée, phénol-formaldéhyde, acrylique, époxy, polyester, ou polyuréthane ou des combinaisons de celles-ci et la résine de la couche de fibres imprégnées de résine ayant été durcie lors d'une première étape séparée de durcissement, de préférence sous une pression de contact, avant l'application de la résine, et le durcissement de la résine de la couche de revêtement de résine lors d'une seconde étape de durcissement.

13. Stratifié intermédiaire résistant aux intempéries destiné à être utilisé dans la fabrication d'un stratifié résistant aux intempéries selon les revendications 11 ou 12, ledit stratifié déco intermédiaire pouvant être obtenu par un procédé comprenant les étapes consistant à :
- fournir une couche de papier imprégné de résine dans laquelle la quantité de résine se situe entre 70 et 190 % en poids sec par rapport au poids du papier,
- durcir la résine de la couche de fibres imprégnées de résine lors d'une première étape de durcissement, une pression de contact étant appliquée lors de ladite première étape de durcissement sur la couche de fibres imprégnées de résine,
- appliquer une couche de revêtement de résine sur la couche de fibres imprégnées de résine au moins partiellement durcie et
- durcir la résine de la couche de revêtement de résine lors d'une seconde étape séparée de durcissement.

14. Stratifié résistant aux intempéries selon les revendications 11 ou 12 ou stratifié intermédiaire selon la revendication 13 présentant une perte de brillant après vieillissement aux intempéries d'au plus 25 % (la perte de brillant étant exprimée en % avant et après 1 300 heures de vieillissement aux intempéries, la perte de brillant étant déterminée dans un brillancemètre TMS-723A (Tasco) sous un angle de 60° en utilisant un spot de lumière de forme ovale de 6 mm x 3 mm et en utilisant un verre brillant noir standard comme standard pour un brillant de 100 % brillant et le vieillissement aux intempéries étant réalisé pendant 1 300 heures sous un appareil de vieillissement aux intempéries UV-2000 Atlas selon la norme EN ISO 4892-3).

15. Utilisation du stratifié résistant aux intempéries selon l'une quelconque des revendications 11 à 14 dans la fabrication de revêtements muraux, de planchers, de surfaces de meubles de jardin, de dessus de tables, de sièges de chaises et de dessus de marches d'escalier, des mains courantes, des garde-corps (par exemple pour les balcons).
